(19) Europäisches Patentamt / European Patent Office / Office européen des brevets

(11) **EP 4 481 870 A1**

(12) **EUROPEAN PATENT APPLICATION**

(43) Date of publication:
**25.12.2024 Bulletin 2024/52**

(21) Application number: **24178919.7**

(22) Date of filing: **29.05.2024**

(51) International Patent Classification (IPC):
$H01M\ 10/04^{(2006.01)}$    $H01M\ 10/052^{(2010.01)}$
$H01M\ 50/107^{(2021.01)}$    $H01M\ 50/184^{(2021.01)}$
$H01M\ 50/186^{(2021.01)}$    $H01M\ 50/197^{(2021.01)}$

(52) Cooperative Patent Classification (CPC):
**H01M 10/0431; H01M 10/052; H01M 50/107;
H01M 50/184; H01M 50/186; H01M 50/197;**
C09J 2203/33; H01M 50/198

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.06.2023 KR 20230078536
23.11.2023 KR 20230164919**

(71) Applicant: **Samsung SDI Co., Ltd.
Yongin-si, Gyeonggi-do 17084 (KR)**

(72) Inventors:
• **CHO, Ik Hwan**
  **17084 Yongin-si,Gyeonggi-do (KR)**
• **YOU, Jiwan**
  **17084 Yongin-si, Gyeonggi-do (KR)**
• **WOO, Changhee**
  **17084 Yongin-si, Gyeonggi-do (KR)**
• **PARK, Jinhwan**
  **17084 Yongin-si, Gyeonggi-do (KR)**

(74) Representative: **Michalski Hüttermann & Partner
Patentanwälte mbB
Kaistraße 16A
40221 Düsseldorf (DE)**

(54) **SEALING TAPE FOR RECHARGEABLE LITHIUM BATTERY AND RECHARGEABLE LITHIUM BATTERY INCLUDING THE SAME**

(57) A sealing tape for a rechargeable lithium battery includes an inorganic sealing tape including an adhesive layer and a hard coating layer on the adhesive layer, wherein the adhesive layer: has adhesiveness, and has a thickness change rate (A) according to Equation 1 of greater than or equal to about 100% and less than or equal to about 120%, and the hard coating layer: does not have adhesiveness, and has a thickness change rate (B) according to Equation 2 of greater than or equal to about 30% and less than or equal to about 70%.

FIG. 1

**Description**

**BACKGROUND**

**(a) Field**

One or more embodiments of the present disclosure are directed toward sealing tapes for a rechargeable lithium battery and rechargeable lithium batteries including the same.

**(b) Description of the Related Art**

A cylindrical rechargeable lithium battery may be manufactured by a process of manufacturing a wound-type or kind electrode assembly by winding a stack of a positive electrode, a separator, and a negative electrode (e.g., into a jelly-roll shape); a process of storing the wound-type or kind electrode assembly in a cylindrical battery case; and a process of impregnating the wound-type or kind electrode assembly with an electrolyte solution and then sealing it.

The wound-type or kind electrode assembly may be made smaller than the cylindrical battery case so that it can be accommodated in the cylindrical battery case. As a result, a set or certain gap may exist between the cylindrical battery case and the wound-type or kind electrode assembly.

However, due to the presence of the gap, the wound-type or kind electrode assembly may easily (and undesirably) rotate or flow (e.g., move) inside the cylindrical battery case, resulting in deterioration of the performance of the rechargeable lithium battery (e.g., increase in internal resistance, damage to electrode tabs). and/or the like).

In this regard, a method has been proposed in which a sealing tape formed with an adhesive layer on a PET and/or PP substrate (hereinafter referred to as "comparable sealing tape") is attached to the outer peripheral surface of the outermost layer of the wound-type or kind electrode assembly. However, in comparable sealing tapes, the PET and/or PP substrate shows little or insubstantial change in thickness even if (e.g., when) impregnated with an electrolyte solution, whereas the adhesive layer may change its thickness if (e.g., when) impregnated with an electrolyte solution.

Accordingly, the comparable sealing tape is prone to detachment from the wound-type or kind electrode assembly impregnated with electrolyte, and has limitations in suppressing or reducing rotation and/or movement of the wound-type or kind electrode assembly inside the cylindrical battery case.

**SUMMARY**

One or more aspects of embodiments of the present disclosure are directed toward a novel sealing tape that can effectively or suitably prevent or reduce the rotation and/or movement of the wound-type or kind electrode assembly inside the cylindrical battery case.

One or more aspects of embodiments of the present disclosure are directed toward a rechargeable lithium battery including the novel sealing tape for rechargeable lithium batteries.

Additional aspects will be set forth in part in the description which follows and, in part, will be apparent from the description, or may be learned by practice of the presented embodiments of the disclosure.

According to embodiments of the present disclosure, a sealing tape for a rechargeable lithium battery includes an inorganic sealing tape including an adhesive layer and a hard coating layer on the adhesive layer; wherein the adhesive layer has adhesiveness and has a thickness change rate (A) according to Equation 1 of greater than or equal to about 100% and less than or equal to about 120%; and the hard coating layer does not have adhesiveness and has a thickness change rate (B) according to Equation 2 of greater than or equal to about 30% and less than or equal to about 70%:

## Equation 1

$$\text{thickness change rate (A) of adhesive layer} = (A2 - A1)/A1 \times 100,$$

wherein, in Equation 1,

A1 is a thickness of the adhesive layer before impregnation with an electrolyte solution, and
A2 is a thickness of the adhesive layer after impregnation with an electrolyte solution;

## Equation 2

$$\text{thickness change rate (B) of hard coating layer} = (B2 - B1)/B1 \times 100,$$

wherein, in Equation 2,

B1 is a thickness of the hard coating layer before impregnation with an electrolyte sollution, and
B2 is a thickness of the hard coating layer after impregnation with an electrolyte solution.

According to one or more embodiments, a rechargeable lithium battery includes a cylindrical battery case; a wound-type or kind electrode assembly accommodated in the cylindrical battery case; a sealing tape according to the present embodiments arranged between an outermost layer of the wound-type or kind electrode assembly and a (e.g., lower) layer (of the electrode assembly) below (e.g., immediately below) the outermost layer; and an electrolyte solution impregnated in the wound-type or kind electrode assembly and the sealing tape.

The sealing tape according to one or more embodiments can effectively or suitably fill (or substantially fill) the gap between the cylindrical battery case and the wound-type or kind electrode assembly by having a three-dimensional shape realized by impregnation with an electrolyte solution, thereby effectively or suitably filling the gap between the cylindrical battery case and the wound-type or kind electrode assembly, preventing or reducing the rotation and/or movement of the wound-type or kind electrode assembly, and preventing or reducing deterioration of the performance of the rechargeable lithium battery.

## BRIEF DESCRIPTION OF THE DRAWINGS

These and/or other aspects will become apparent and more readily appreciated from the following description of the embodiments, taken in conjunction with the accompanying drawings in which:

FIG. 1 is a schematic view of a sealing tape 200 according to one or more embodiments before impregnation with an electrolyte solution.
FIG. 2 is a schematic view of the sealing tape 200 according to one or more embodiments after impregnation with an electrolyte solution.
FIG. 3 is a schematic view showing a rechargeable lithium battery 100 according to one or more embodiments.

## DETAILED DESCRIPTION

Hereinafter, example embodiments will be described in more detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. Singular expressions include plural expressions unless the context clearly dictates otherwise.

As used herein, "combination thereof" may refer to a mixture, a stack, a composite, a copolymer, an alloy, a blend, and/or a reaction product of constituents.

Herein, it should be understood that terms such as "comprise," "include," and/or "have" are intended to designate the presence of an embodied feature (e.g., aspect), number, step (e.g., act or task), element, or a combination thereof, but it does not preclude the possibility of the presence or addition of one or more other features, numbers, steps, elements, or a combination thereof.

In the drawings, the thickness of layers, films, panels, regions, and/or the like, are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element (e.g., without any intervening elements therebetween) or intervening elements may also be present. In contrast, if (e.g., when) an element is referred to as being "directly on" another element, there are no intervening elements present.

"Layer" herein includes not only a shape formed on the whole surface if (e.g., when) viewed from a plan view, but also a shape formed on a partial surface.

"Thickness" may be, for example, measured through photographs taken with an optical microscope, such as a scanning electron microscope.

It will be understood that, although the terms first, second, etc. may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

## Sealing tape

One or more embodiments provide a sealing tape for a rechargeable lithium battery including an inorganic sealing tape including an adhesive layer and a hard coating layer on the adhesive layer; wherein the adhesive layer has adhesiveness and has a thickness change rate (A) according to Equation 1 of greater than or equal to about 100% and less than or equal to about 120%; and the hard coating layer does not have adhesiveness and has a thickness change rate (B) according to Equation 2 of greater than or equal to about 30% and less than or equal to about 70%:

## Equation 1

$$\text{thickness change rate (A) of adhesive layer} = (A2 - A1)/A1 \times 100,$$

wherein, in Equation 1,

A1 is a thickness of the adhesive layer before impregnation with an electrolyte solution, and
A2 is a thickness of the adhesive layer after impregnation with an electrolyte solution;

## Equation 2

$$\text{thickness change rate (B) of hard coating layer} = (B2 - B1)/B1 \times 100,$$

wherein, in Equation 2,

B1 is the thickness of the hard coating layer before impregnation with an electrolyte solution, and
B2 is a thickness of the hard coating layer after impregnation with an electrolyte solution.

As used herein, "impregnation with an electrolyte solution" into a specific object refers to that the electrolyte solution penetrates into the specific object.

The electrolyte solution is not particularly limited, but may include a non-aqueous organic solvent and a lithium salt; a non-aqueous organic solvent may be ethylene carbonate (EC) and/or dimethyl carbonate (DMC). It may include propylene carbonate (PC), and/or fluorobenzene (FB); and the lithium salt may include $LiPF_6$.

Based on 100 volume% of the non-aqueous organic solvent, the ethylene carbonate (EC) may be included in an amount of about 10 to about 50 volume%, or about 20 to about 40 volume%; the dimethyl carbonate (DMC) may be included in an amount of about 40 to about 70 volume%, or about 50 to about 60 volume%; the propylene carbonate (PC) may be included in an amount of about 0.1 to about 15 volume%, or about 1 to about 10 volume%, and the fluorobenzene (FB) may be included in an amount of about 1 to about 20 volume%, or about 5 to about 15 volume%.

In the electrolyte solution, a molar concentration of the lithium salt may be about 0.8 to about 1.5 M, about 0.9 to about 1.3 M, or about 1.0 to about 1.2 M. The same applies.

A method of measuring the thickness change rate (A) of the adhesive layer is as follows.

The adhesive layer is cut to have width*length = 10 mm*10 mm to prepare a specimen for measuring the thickness change rate, and thickness of the adhesive layer before impregnation with an electrolyte solution (A1) is measured. Each of the specimens for measuring the thickness change rate is then impregnated with an electrolyte solution, left in a sealed state at room temperature for 1 day, and then the resulting thickness is measured (thickness of the adhesive layer after impregnation with an electrolyte solution (A2)).

Substituting the thickness (A1) of the adhesive layer before impregnation with the electrolyte solution and the thickness (A2) of the adhesive layer after impregnation with the electrolyte solution into Equation 1, the thickness change rate (A) of the adhesive layer is obtained.

A method of measuring the thickness change rate (B) of the hard coating layer is as follows.

The hard coating layer is cut to have width*length=10 mm*10 mm to prepare a specimen for measuring the thickness change rate, and thickness of the hard coating layer before impregnation with an electrolyte solution (B1) is measured. Each of the specimens for measuring the thickness change rate is then impregnated with an electrolyte solution, left in a sealed state at room temperature for 1 day, and then the thickness is measured (thickness of the hard coating layer after impregnation with an electrolyte solution (B2)).

By substituting the thickness (B1) of the hard coating layer before impregnation with the electrolyte solution and the thickness (B2) of the hard coating layer after impregnation with the electrolyte solution into Equation 2, the thickness change rate (B) of the hard coating layer is obtained.

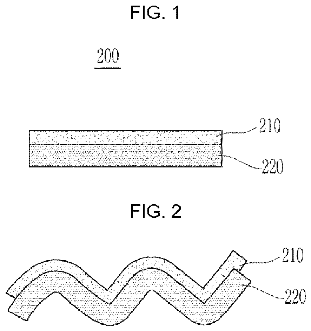

FIG. 1 is a schematic view of a novel sealing tape 200 of one or more embodiments before impregnation with an electrolyte solution. Before the novel sealing tape of the present embodiments is impregnated with an electrolyte solution, two objects that are spaced and/or apart (e.g., spaced or spaced apart) from each other can be effectively or suitably fixed by mutual balance between an adhesive force of the adhesive layer 220 and a fixing force of the hard coating layer 210.

FIG. 2 is a schematic view of the novel sealing tape 200 of one or more embodiments after impregnation with an electrolyte solution. After the novel sealing tape of one or more embodiments is impregnated with the electrolyte solution, by balancing the thickness changes that occur after the adhesive layer 220 and the hard coating layer 210 are impregnated with the electrolyte solution, a three-dimensional shape that can fill (or substantially fill) the gap between the two objects that are spaced apart from each other is realized.

Accordingly, the novel sealing tape of one or more embodiments effectively or suitably fills (or substantially fills) the gap between the cylindrical battery case and the wound-type or kind electrode assembly through a three-dimensional shape realized (or obtained) by electrolyte impregnation, thereby preventing or reducing rotation and/or movement of the wound-type or kind electrode assembly inside the cylindrical battery case, and performance degradation of the rechargeable lithium battery.

The novel sealing tape of one or more embodiments may be attached to the outer peripheral surface of the outermost layer of the wound-type or kind electrode assembly, but may be placed between the outermost layer of the wound-type or kind electrode assembly and the lower layer thereof (e.g. a layer below (e.g., immediately below) the outermost layer of the electrode assembly).

Hereinafter, the novel sealing tape of one or more embodiments is described in more detail.

**Change in thickness of adhesive layer and change in thickness of hard coating layer**

Before the novel sealing tape of one or more embodiments is impregnated with an electrolyte solution, a thickness of the adhesive layer 220 may be about 2 micrometer ($\mu$m) to about 10 $\mu$m, about 3 $\mu$m to about 10 $\mu$m, or about 3 $\mu$m to about 5 $\mu$m; a thickness of the hard coating layer 210 may be about 5 $\mu$m to about 30 $\mu$m, about 10 $\mu$m to about 30 $\mu$m, or about 10 $\mu$m to about 25 $\mu$m; and a thickness ratio of the hard coating layer 210 and the adhesive layer 220 may be about 1:3 to about 1:10, about 1:3 to about 1:8, or about 1:3 to about 1:7.

After the novel sealing tape of one or more embodiments is impregnated with an electrolyte solution, the adhesive layer 220 may have a thickness change rate (A) according to Equation 1 of greater than or equal to about 100% and less than or equal to about 120%, or greater than or equal to about 110% and less than or equal to about 120%; and the hard coating layer 210 may have a thickness change rate (B) according to Equation 2 of greater than or equal to about 30% and less than or equal to about 70%, or greater than or equal to about 40% and less than or equal to about 70%.

In one or more embodiments, after the novel sealing tape of one or more embodiments is impregnated with an electrolyte solution, a ratio of the thickness change rate of the adhesive layer (A) to the thickness change rate of the hard coating layer (B) may be about 1.5:1 to about 3:1, or about 1.7: about 3:1.

If the above ranges are satisfied, a three-dimensional shape that can suitably fill (or substantially fill) the gap between two objects that are spaced apart from each other may be implemented by balancing the thickness changes that occur after each of the adhesive layer 220 and the hard coating layer 210 is impregnated with the electrolyte solution.

However, if the thickness change rate (A) of the adhesive layer 220 according to Equation 1 is less than the above ranges, it may not be enough to fix (e.g., affix) two objects that are spaced apart from each other. If the thickness change rate (A) of the adhesive layer 220 according to Equation 1 exceeds the above range, a volume of the cylindrical battery case may be excessively (e.g., undesirably or unsuitably) expanded.

In one or more embodiments, if the thickness change rate (B) of the hard coating layer 210 according to Equation 2 does not satisfy the above range, it may not be suitably harmonized with the thickness change of the adhesive layer 220. The same applies if the ratio of the thickness change rate (A) of the adhesive layer to the thickness change rate (B) of the hard coating layer does not satisfy the above range.

**Gel Fraction of Adhesive Layer**

The adhesive layer may have a gel fraction of greater than or equal to about 70 wt%, greater than or equal to about 75 wt%, or greater than or equal to about 80 wt%. If the gel fraction of the adhesive layer is less than about 70 wt%, the adhesive layer may swell and disperse. The upper limit of the gel fraction of the adhesive layer is not particularly limited, but may be less than about 100 wt%.

The gel fraction of the adhesive layer may be obtained by the following method.

1 g (W0) of the specimen for gel fraction measurement is taken and is put into a 20 mL vial, 1,2,4-trichlorobenzene (about 10 mL) is added to sufficiently or suitably submerge the specimen for gel fraction measurement, and then the resultant is heated at 130 °C for greater than or equal to about 2 hours. The heated solution is filtered and separated using a 200-mesh wire mesh. Herein, the unfiltered and undissolved components are washed twice in xylene solution and then dried in a hot air oven at 120 °C for 12 hours. Finally, the dried undissolved components are measured (W), and the gel fraction is calculated using Equation 3.

## Equation 3

$$\text{Gel fraction (\%)} = (W/W0) \times 100.$$

In Equation 3, W is a weight of the dried undissolved component; and W0 is a weight of the initial adhesive layer specimen, that is, 1g.

**Peel Strength of Adhesive Layer**

The adhesive layer may achieve a set or specific peel strength due to its adhesiveness.

For example, the adhesive layer may have a T-Peel peel strength of greater than or equal to about 40 gf/cm, greater than or equal to about 50 gf/cm, or greater than or equal to about 60 gf/cm, measured at a peel speed of 300 mm/min and a peel angle of 180 degrees, with respect to the substrate to which the adhesive layer is attached. The upper limit of the peel strength of the adhesive layer is not particularly limited, but may be less than or equal to about 140 gf/cm.

The peel strength of the adhesive layer can be measured by the following method.

As a substrate to be attached, two copper substrates with width*length*thickness=150 mm*10 mm*10 $\mu$m are prepared. Between the two copper substrates, an adhesive layer with a dimensions of 100 mm*30 mm*12 $\mu$m (width * height * thickness) is placed to obtain a specimen for measuring peel strength. The specimen for measuring peel strength is pressurized using an autoclave at a pressure of 3.5 bar and at a temperature of 50 °C for 1000 seconds. At 25 °C, one copper substrate of the pressurized specimen for measuring peel strength is fixed to a universal physical property analyzer (product name: TA.XT_Plus Texture Analyzer, manufacturer: Stable Micro Systems), the other copper substrate is moved (e.g., pulled) at a speed of 60 mm/min and the T-Peel peel strength is measured.

**Constituting Components of Adhesive Layer**

The adhesive layer may include a first acrylic resin.

The first acrylic resin may be a copolymer of 2-ethylhexyl acrylate and 4-hydroxybutyl acrylate crosslinked with an isocyanate-based crosslinking agent.

**Constituting Components of Hard Coating Layer**

The hard coating layer may be a thermosetting resin that does not include (e.g., that excludes) a thermoplastic resin. If the hard coating layer contains a thermoplastic resin, it may melt if (e.g., when) heated and may not be able to suitably function as a sealing tape.

The hard coating layer may include an acrylate-based thermosetting resin, an acrylate-based UV-curable resin, a urethane-based thermosetting resin, a urethane-based UV-curable resin, an epoxy-based thermosetting resin, an epoxy-based UV-curable resin, or a combination thereof.

For example, the hard coating layer may include a second acrylic resin. The second acrylic resin may be a thermosetting resin and may be a copolymer of dipentaerythritol hexaacrylate, pentaerythritol tetraacrylate, and ethoxylated premethylolpropane triacrylate.

**Rechargeable Lithium Battery**

One or more embodiments provide a rechargeable lithium battery including a cylindrical battery case; a wound-type or kind electrode assembly accommodated in the cylindrical battery case; a novel sealing tape of one or more embodiments arranged between the outermost layer of the wound-type or kind electrode assembly and the lower layer thereof (e.g. a layer below (e.g., immediately below) the outermost layer of the electrode assembly); and an electrolyte solution impregnated in the wound-type or kind electrode assembly and the sealing tape.

The sealing tape of one or more embodiments may effectively or suitably fill (or substantially fill) the gap between the cylindrical battery case and the wound-type or kind electrode assembly and/or between the outermost layer of the wound-type or kind electrode assembly and the lower layer thereof by having a three-dimensional shape realized by impregnation with the electrolyte solution. As a result, the sealing tape of one or more embodiments arranged between the outermost layer of the wound-type or kind electrode assembly and the lower layer thereof suppresses or reduces the rotation and/or movement of the wound-type or kind electrode assembly inside the cylindrical battery case, and performance degradation of the rechargeable lithium battery may be prevented or reduced.

As described above, the novel sealing tape of one or more embodiments may be attached to the outer peripheral surface of the outermost layer of the wound-type or kind electrode assembly, but in another case, the sealing tape is desirably placed between the outermost layer of the wound-type or kind electrode assembly and the lower layer thereof. In the latter (other) case, the capacity of the rechargeable lithium battery can be further improved by increasing the density of the positive electrode and/or negative electrode.

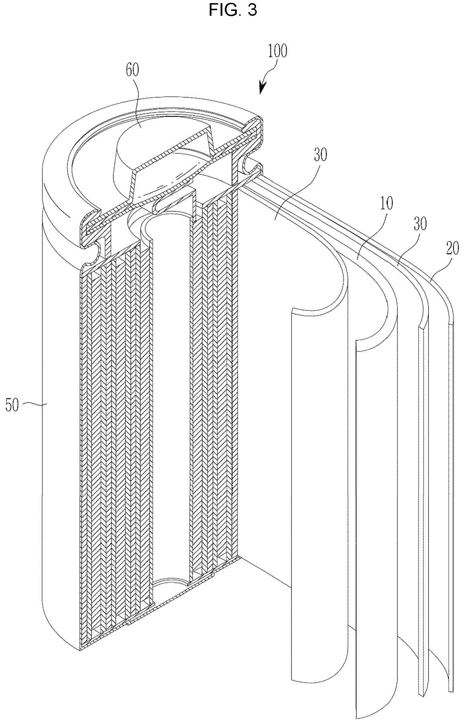

FIG. 3 is a schematic view showing a rechargeable lithium battery according to one or more embodiments.

Hereinafter, a rechargeable lithium battery of one or more embodiments will be described in more detail, excluding descriptions that overlap with the above-mentioned descriptions.

**Wound-type or kind Electrode Assembly**

The wound-type or kind electrode assembly may be a stack in which a positive electrode, a separator, and a negative electrode are sequentially stacked and wound so that the negative electrode may be the outermost layer.

Accordingly, the fixing force between the outermost layer (e.g., negative electrode) of the wound-type or kind electrode assembly and the lower layer thereof (e.g., separator) may be strengthened.

A length of the sealing tape may be about 0.8 to about 1.5 times the circumference of the wound-type or kind electrode assembly.

A portion of the sealing tape may be exposed to the outside of the outermost layer of the wound-type or kind electrode assembly. For example, if the length of the sealing tape exceeds about 1 time compared to the circumference of the wound-type or kind electrode assembly, an excess length of the sealing tape may be exposed to the outside of the wound-type or kind electrode assembly, and may effectively or suitably prevent or reduce the rotation and/or movement of the wound-type or kind electrode assembly inside the cylindrical battery case.

## Positive Electrode Active Material

The positive electrode active material may include lithiated intercalation compounds that reversibly intercalate and deintercalate lithium ions. For example, the positive electrode active material may include one or more composite oxides of a metal selected from among cobalt, manganese, nickel, and a combination thereof, and lithium.

The composite oxide may be a lithium transition metal composite oxide, and specific examples may include lithium nickel-based oxide, lithium cobalt-based oxide, lithium manganese-based oxide, a lithium iron phosphate-based compound, cobalt-free lithium nickel-manganese-based oxide, or a combination thereof.

As an example, the positive electrode active material may be a high nickel-based positive electrode active material having a nickel content (e.g., amount) of greater than or equal to about 80 mol% based on 100 mol% of all metals excluding lithium in the lithium transition metal composite oxide. The content (e.g., amount) of nickel in the high nickel-based positive electrode active material may be greater than or equal to about 85 mol%, greater than or equal to about 90 mol%, greater than or equal to about 91 mol%, or greater than or equal to about 94 mol% and less than or equal to about 99 mol% based on 100 mol% of all metals excluding lithium in the lithium transition metal composite oxide. The high-nickel-based positive electrode active material may achieve relatively or suitably high capacity and may be applied to high-capacity, high-density rechargeable lithium batteries.

For example, a compound represented by any of the following chemical formulae can be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); $Li_aFePO_4$ ($0.90 \leq a \leq 1.8$)

In the above chemical formulae, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; Q may be Ti, Mo, Mn, or a combination thereof; Z may be Cr, V, Fe, Sc, Y, or a combination thereof; and $L^1$ may be Mn, Al or a combination thereof.

## Positive Electrode

The positive electrode for a rechargeable lithium battery may include a current collector and a positive electrode active material layer on the current collector. The positive electrode active material layer includes a positive electrode active material and may further include a binder and/or a conductive material.

An amount of the positive electrode active material may be about 90 wt% to about 99.5 wt% based on 100 wt% of the positive electrode active material layer.

In one or more embodiments, the positive electrode active material layer may further include a binder and a conductive material. Herein, amounts of the binder and the conductive material may be about 0.5 wt% to about 5 wt%, respectively, based on 100 wt% of the positive electrode active material layer.

The binder serves to attach the positive electrode active material particles well or suitably to each other and also to attach the positive electrode active material well or suitably to the current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and combinations thereof, but are not limited thereto.

The conductive material may be used to impart conductivity (e.g., electrical conductivity) to the electrode and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, Ketjen black, a carbon fiber, a carbon nanofiber, and carbon nanotube; a metal-based material including copper, nickel, aluminum, silver, and/or the like, in a form of a metal powder and/or a metal fiber; a conductive polymer such as a polyphenylene derivative; or a mixture thereof.

Aluminum (Al) may be used as the current collector, but the present disclosure is not limited thereto.

## Negative Electrode Active Material

The negative electrode active material may be a material that reversibly intercalates/deintercalates lithium ions, a lithium metal, a lithium metal alloy, a material capable of doping and dedoping lithium, and/or a transition metal oxide.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x \leq 2$), a Si-Q alloy (wherein Q is selected from among an alkali metal, an alkaline-earth metal, a Group 13 element, a Group 14 element (excluding Si), a Group 15 element, a Group 16 element, a transition metal, a rare earth element, and a combination thereof, and may be selected from among, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof). The Sn-based negative electrode active material may include Sn, $SnO_2$, a Sn alloy, or a combination thereof.

The silicon-carbon composite may be a composite of silicon and amorphous carbon. An average particle diameter ($D_{50}$) of the silicon-carbon composite particles may be, for example, about 0.5 $\mu$m to about 20 $\mu$m. As used herein, unless otherwise defined, the average particle diameter ($D_{50}$) refers to a diameter of particles having a cumulative volume of 50 % by volume in the particle size distribution. The average particle size $D_{50}$ may be measured by a suitable technique, e.g., using a particle size analyzer, transmission electron microscope photography, and/or scanning electron microscope photography. Another method may be performed by using a measuring device with dynamic light scattering, analyzing data to count a number of particles relative to each particle size, and then calculating to obtain an average particle diameter $D_{50}$. In the present specification, when particles are spherical, "diameter" indicates a particle diameter, and when the particles are non-spherical, the "diameter" indicates a major axis length.

According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core. The crystalline carbon may be artificial graphite, natural graphite, or a combination thereof. The amorphous carbon may include soft carbon and/or hard carbon, a mesophase pitch carbonization product, and/or calcined coke.

When the silicon-carbon composite includes silicon and amorphous carbon, a content (e.g., amount) of silicon may be about 10 wt% to about 50 wt% and the content (e.g., amount) of amorphous carbon may be about 50 wt% to about 90 wt% based on 100 wt% of the silicon-carbon composite. In one or more embodiments, if (e.g., when) the composite includes silicon, amorphous carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous carbon may be about 20 wt% to about 40 wt% based on 100 wt% of the silicon-carbon composite.

A thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may exist as silicon alone, in the form of a silicon alloy, and/or in an oxidized form. The oxidized form of silicon may be represented by $SiO_x$ ($0 < x \leq 2$). Herein, the atomic content (e.g., amount) ratio of Si:O, which indicates a degree of oxidation, may be about 99:1 to about 33:67. As used herein, if (e.g., when) a definition is not otherwise provided, an average particle diameter ($D_{50}$) indicates a particle where an accumulated volume is about 50 volume% in a particle distribution.

The Si-based negative electrode active material and/or the Sn-based negative electrode active material may be used in combination with a carbon-based negative electrode active material. When using a mixture of Si-based negative electrode active material and/or Sn-based negative electrode active material and carbon-based negative electrode active material, a mixing ratio may be about 1:99 to about 90:10 by weight.

**Negative Electrode**

The negative electrode for a rechargeable lithium battery includes a current collector, and a negative electrode active material layer on the current collector. The negative electrode active material layer includes a negative electrode active material and may further include a binder and/or a conductive material.

A content (e.g., amount) of the negative electrode active material may be about 95 wt% to about 99.5 wt% based on 100 wt% of the negative electrode active material layer. A content (e.g., amount) of the binder may be about 0.5 wt% to about 5 wt% based on 100 wt% of the negative electrode active material layer. A content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may serve to attach the negative electrode active material particles well or suitably to each other and also to attach the negative electrode active material well or suitably to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and combinations thereof.

When an aqueous binder is used as the negative electrode binder, it may further include a cellulose-based compound capable of imparting viscosity. The cellulose-based compound includes one or more of carboxymethyl cellulose, hydroxypropylmethyl cellulose, methyl cellulose, or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity, and any suitable electrically conductive material may be used as a conductive material unless it causes a chemical change (e.g., unless it causes an undesirable chemical change in the battery). Examples of the conductive material may be a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form of a metal powder and/or a metal fiber; a conductive polymer such as a polyphenylene derivative; or a mixture thereof.

The negative electrode current collector may include one (e.g., at least one) selected from among a copper foil, a nickel foil, a stainless steel foil, a titanium foil, a nickel foam, a copper foam, a polymer substrate coated with a conductive metal, and a combination thereof, but the present disclosure is not limited thereto.

**Electrolyte Solution**

The electrolyte solution for a rechargeable lithium battery includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, and/or an ether group), amides such as dimethylformamide, dioxolanes such as 1,3-dioxolane and/or 1,4-dioxolane, sulfolanes, and/or the like.

The non-aqueous organic solvent may be used alone or in a mixture of two or more types (kinds), and if (e.g., when) two or more types (kinds) are used in a mixture, a mixing ratio can be appropriately or suitably adjusted according to the desired or suitable battery performance, which may be widely understood by skilled person working in the field.

According to one or more embodiments, if (e.g., when) using a carbonate-based solvent, cyclic carbonate and chain carbonate can be mixed and used, and cyclic carbonate and chain carbonate can be mixed at a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte may further include vinylethyl carbonate, vinylene carbonate, and/or an ethylene carbonate-based compound in order to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables (e.g., facilitates) a basic operation of a rechargeable lithium battery, and improves transportation of the lithium ions between positive and negative electrodes. Examples of a lithium salt may include one or more selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$, wherein x and y are integers from 1 to 20, lithium trifluoromethane sulfonate, lithium tetrafluoroethanesulfonate, lithium difluorobis(oxalato)phosphate (LiDFOB), and lithium bis(oxalato)borate (LiBOB).

A concentration of lithium salt may be used within the range of about 0.1 M to about 2.0 M. If the concentration of lithium salt is within the above range, the electrolyte solution has appropriate or suitable ionic conductivity and viscosity, and thus excellent or suitable performance can be achieved and lithium ions can move effectively.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on a surface (e.g., one or both (e.g., simultaneously) surfaces (e.g., opposite surfaces or sides)) of the porous substrate.

The porous substrate may be a polymer film formed of any one (e.g., at least one) selected from among polymer polyolefin (such as polyethylene and/or polypropylene), polyester (such as polyethylene terephthalate and/or polybutylene terephthalate), polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (TEFLON®), and/or a copolymer and/or mixture of two or more thereof.

The porous substrate may have a thickness of about 1 μm to about 40 μm, for example, about 1 μm to about 30 μm, about 1 μm to about 20 μm, about 5 μm to about 15 μm, or about 10 μm to about 15 μm.

The organic material may include a (meth)acryl-based copolymer including a first structural unit derived from (meth)acrylamide, and a second structural unit including at least one selected from among a structural unit derived from (meth)acrylic acid or (meth)acrylate and a structural unit derived from (meth)acrylamidosulfonic acid or a salt thereof.

The inorganic material may include inorganic particles selected from among $Al_2O_3$, $SiO_2$, $TiO_2$, $SnO_2$, $CeO_2$, $MgO$, $NiO$, $CaO$, $GaO$, $ZnO$, $ZrO_2$, $Y_2O_3$, $SrTiOs$, $BaTiOs$, $Mg(OH)_2$, boehmite, and combinations thereof, but the present disclosure is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed in one coating layer or may exist in a stacked form of a coating layer including an organic material and a coating layer containing an inorganic material.

A thickness of the coating layer may be about 0.5 μm to about 20 μm, for example, about 1 μm to about 10 μm, or about 1 μm to about 5 μm.

**Rechargeable Lithium Battery**

The rechargeable lithium battery may be classified into cylindrical, prismatic, pouch, and/or coin-type or kind batteries, and/or the like depending on its shape. FIG. 3 is a schematic view showing a rechargeable lithium battery according to one or more embodiments. Referring to FIG. 3, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 3.

Furthermore, the rechargeable lithium battery in which the novel sealing tape of one or more embodiments is applied to the outermost layer of the wound-type or kind electrode assembly may have improved capacity of the battery by increasing the electrode plate density compared with the case where the tape is attached between the wound-type or kind electrode assembly and the battery case.

**Example 1**

**(1) Preparation of Hard Coating Layer**

40 parts by weight of IPA (isopropyl alcohol) and 20 parts by weight of MCS (2-methoxyethanol) as a solvent; 13 parts by weight of dipentaerythritol hexa acrylate (DPHA), 12 parts by weight of pentaerythritol tetraacrylate (PETA), and 12 parts by weight of ethoxylated trimethylolpropane triacrylate (TMP3EOTA, 3 mol of an EO content) as monomers; and 3 parts by weight of Irgacure® 184 as a polymerization initiator were mixed and stirred to prepare a hard coating solution.
The hard coating solution was applied on a releasing film, dried at 80 °C for 1 minute, and then, irradiated by using a metal halide lamp with UV of 300 mJ/cm$^2$ under a nitrogen atmosphere to form a 4 μm-thick hard coating layer.

**(2) Preparation of Adhesive Layer**

85 parts by weight of ethyl acetate and 15 parts by weight of toluene as a solvent; 95 parts by weight of 2-ethylhexyl acrylate and 5 parts by weight of 4-hydroxybutylacrylate as monomers; and 0.1 part by weight of 2,2'-azobisisobutyronitrile as a polymerization initiator were mixed, gently stirred after being substituted with a nitrogen atmosphere, and polymerized for 8 hours while maintaining the temperature at 55 °C. to obtain an acrylic prepolymer with a weight average molecular weight (Mw) of 1,300,000 g/mol and Mw/Mn = 1.84.
0.05 parts by weight of a trimethylolpropane adduct of xylylene diisocyanate (Product name: Takenate™ D-110N, xylylene diisocyanate (XDI), manufacturer: Mitsui Chemicals) was added to 100 parts by weight of the acrylic prepolymer to prepare acrylic adhesive composition.
The acrylic adhesive composition was coated on the release film and dried at 135 °C for 3 minutes to obtain an adhesive layer with a thickness of 12 μm.

**(3) Manufacturing of Sealing Tape**

The adhesive layer was transferred onto the hard coating layer to prepare a sealing tape.

**(4) Manufacturing of Rechargeable Lithium Battery Cells**

LiNi$_{0.75}$Mn$_{0.23}$Al$_{0.02}$O$_2$ as a positive electrode active material, polyvinylidene fluoride as a binder, and acetylene black as a conductive material were mixed in a weight ratio of 96:3:1 and dispersed in N-methyl pyrrolidone to prepare a positive electrode active material slurry.
The positive electrode active material slurry was coated on a 15 μm-thick Al foil, dried at 100 °C, and then pressed to manufacture a positive electrode.
Artificial graphite was used as the negative electrode active material, and the negative electrode active material, a styrene-butadiene rubber binder, and carboxymethyl cellulose were mixed at a weight ratio of 98:1:1, and dispersed in distilled water to prepare a negative electrode active material slurry.
The negative electrode active material slurry was coated on a 10 μm-thick Cu foil, dried at 100 °C, and then pressed to produce a negative electrode.
A separator made of polyethylene (thickness: 10 μm) was placed between the positive electrode and the negative electrode to manufacture a stack, and the stack was wound - so that the negative electrode was the outermost layer - to manufacture a wound-type or kind electrode assembly (circumference: 64 mm). The sealing tape was cut to a length of (70 mm) and placed in the gap between the outermost layer (negative electrode) and the lower layer (separator) of the wound-type or kind electrode assembly. Herein, a portion (60 mm) of the sealing tape was exposed to the outside of the wound-type or kind electrode assembly.
The wound-type or kind electrode assembly on which the sealing tape was placed was stored in a cylindrical battery case, an electrolyte solution was injected, and the battery case was sealed to obtain a rechargeable lithium battery cell.
The electrolyte solution was a 1.1M concentration of LiPF$_6$ dissolved in a mixed solvent of ethylene carbonate (EC), dimethyl carbonate (DMC), propylene carbonate (PC), and fluorobenzene (FB), in a volume ratio of EC:DMC:PC:FB=30:55:5:10.

**Example 2**

A sealing tape and a rechargeable lithium battery cell were manufactured in substantially the same manner as in Example 1, except that the thickness of the hard coating layer was changed to be 3 μm.

**Example 3**

A sealing tape and a rechargeable lithium battery cell were manufactured in substantially the same manner as in Example 1, except that the thickness of the hard coating layer was changed to be 5 $\mu$m.

**Example 4**

A sealing tape and a rechargeable lithium battery cell were manufactured in substantially the same manner as in Example 1, except that the thickness of the hard coating layer was changed to be 10 $\mu$m.

**Example 5**

A sealing tape and a rechargeable lithium battery cell were manufactured in substantially the same manner as in Example 1, except that the thickness of the hard coating layer was changed to be 20 $\mu$m.

**Example 6**

A sealing tape and a rechargeable lithium battery cell were manufactured in substantially the same manner as in Example 1, except that the thickness of the hard coating layer was changed to be 25 $\mu$m.

**Comparative Example 1**

A sealing tape and a rechargeable lithium battery cell were manufactured in substantially the same manner as in Example 1, except that a 4 $\mu$m-thick PET substrate was used instead of the hard coating layer.

**Comparative Example 2**

A sealing tape and a rechargeable lithium battery cell were manufactured in substantially the same manner as in Example 1, except that a 10 $\mu$m-thick PP substrate was used instead of the hard coating layer.

**Evaluation Example 1: Thickness Change Rate**

**(1) Thickness Change Rate of Adhesive Layer**

Each of the adhesive layers according to Examples 1 to 6 and Comparative Examples 1 and 2 was cut into a size of a width*a length = 10 mm*10 mm to prepare a specimen for measuring a thickness change rate (initial thickness of each sample was taken as a thickness of each adhesive layer before impregnation with an electrolyte solution, A1). The specimen for measuring a thickness change rate was impregnated with the electrolyte solution and sealed and then, allowed to stand at room temperature for 1 day to measure thickness (taken as a thickness of the adhesive layer after impregnation with the electrolyte solution, A2).
The thickness A1 of the adhesive layer before the impregnation with the electrolyte solution and the thickness A2 of the adhesive layer after the impregnation with the electrolyte solution were inserted into Equation 1 to calculate the thickness change rate (A) of the adhesive layer. The results are shown in Tables 1 and 2.
The composition of the electrolyte solution was the same as in Example 1.

## Equation 1

$$\text{Thickness change rate (A) of adhesive layer} = (A2 - A1)/A1 \times 100.$$

In Equation 1,

A1 is a thickness of the adhesive layer before impregnation with an electrolyte solution, and
A2 is a thickness of the adhesive layer after impregnation with an electrolyte solution.

**(2) Thickness Change Rates of Hard Coating Layer and Substrate Layer**

Each of the adhesive layers according to Examples 1 to 6 and Comparative Examples 1 and 2 was cut into a size of a width*a length = 10 mm*10 mm to prepare a specimen for measuring a thickness change rate (initial thickness of each sample was taken as a thickness of a hard coating layer (of the Examples) or a substrate (of the Comparative Examples) before impregnation with an electrolyte solution, B1). The specimen for measuring a thickness change rate was impregnated with the electrolyte solution and sealed and then, allowed to stand at room temperature for 1 day (resulting thickness of each sample was taken as a thickness of the hard coating layer (of the Examples) or the substrate (of the Comparative Examples) after the impregnation with the electrolyte solution, B2).

The thickness B1 of the hard coating layer or the PET substrate before the impregnation with the electrolyte solution and the thickness B2 of the hard coating layer or the PET substrate after the impregnation with the electrolyte solution were inserted into Equation 2 to calculate the thickness change rate (B) of the hard coating layer or the PET substrate. The results are shown in Tables 1 and 2.

## Equation 2

$$\text{Thickness change rate (B) of hard coating layer or substrate layer} = (B2 - B1)/B1 \times 100$$

In Equation 2,

B1 is a thickness of the hard coating layer or the substrate layer before impregnation with an electrolyte solution, and B2 is a thickness of the hard coating layer or the substrate layer after impregnation with an electrolyte solution.

### (3) A/B Ratio

In one or more embodiments, ratios of A/B were obtained from (1) and (2) of Evaluation Example 1, and are shown in Tables 1 and 2.

### Evaluation Example 2: Peel Strength of Adhesive Layer

The adhesive layers of Examples 1 to 6 and Comparative Examples 1 and 2 were prepared in an area of 100 mm*30 mm*12 $\mu$m (width*length*thickness), respectively. Additionally, as substrates to be attached, two copper substrates with width*length*thickness=150 mm*10 mm*10 $\mu$m were prepared.

The adhesive layer was placed between the two copper substrates to obtain a specimen for measuring peel strength. The specimens for measuring peel strength were pressurized using an autoclave at a pressure of 3.5 bar and 50 °C for 1000 seconds. At 25 °C, one copper substrate of the pressurized specimen for measuring peel strength was fixed to a universal physical property analyzer (product name: TA.XT_Plus Texture Analyzer, manufacturer: Stable Micro Systems), and the other copper substrate was pulled at a speed of 60 mm/min to measure T-Peel peel strength. The results are shown in Tables 1 and 2.

### Evaluation Example 3: Gel Fraction

### (1) Gel Fraction of Adhesive Layer

Each of the adhesive layers of Examples 1 to 6 and Comparative Examples 1 and 2 was taken by (or at) 1 g (W0) as a specimen for measuring a gel fraction, and after placing the specimen in a 20 mL vial, 1,2,4-trichlorobenzene (about 10 mL) was added thereto to sufficiently submerge the specimen and then, heated at 130 °C for 2 hours or more. The heated solution was filtered and separated with a 200 wire mesh. Herein, unfiltered and undissolved components were twice washed with a xylene solution and then, dried at 120 °C in a hot air oven for 12 hours. Finally, the dried undissolved components (W) were measured to obtain the gel fraction according to Equation 3. The results are shown in Tables 1 and 2.

## Equation 3

$$\text{Gel fraction (\%)} = (W/W0) \times 100.$$

In Equation 3, W is a weight of the dried undissolved components; and W0 is a weight of the initial adhesive layer specimen, that is, 1 g.

**(2) Gel fraction of Hard Coating Layer and Substrate layer**

Each of the adhesive layers of Examples 1 to 6 and Comparative Examples 1 and 2 was evaluated with respect to gel fractions in substantially the same manner as in Evaluation Example 3, and the results are shown in Tables 1 and 2.

**Evaluation Example 4: Ability to Implement Three-dimensional Shape of Sealing Tape**

Each of the rechargeable lithium battery cells of Examples 1 to 6 and Comparative Examples 1 and 2 was stored at room temperature for 1 day.

Subsequently, each of the rechargeable lithium battery cells was disassembled to take out an electrode assembly, and then, a sealing tape arranged in a gap of an outermost layer (a negative electrode) and its lower layer (separator) of the wound-type electrode assembly was evaluated according to the following criteria. The results are shown in Tables 1 and 2.

○: A three-dimensional shape was observed, as shown in FIG. 2
X: separated from the wound-type or kind electrode assembly with no three-dimensional shape shown in FIG. 2.

**Evaluation Example 5: Gap filling Ability of Sealing Tape**

Each of the sealing tapes of Examples 1 to 6 and Comparative Examples 1 and 2 was evaluated with respect to gap filling ability in the following two methods, and the results are shown in Tables 1 and 2.

The gap filling ability of the sealing tapes was evaluated in a method of evaluating flow prevention ability of the electrode assembly, and the flow prevention ability of the electrode assembly were evaluated in a residual vibration evaluation method and a residual impact evaluation method.

(1) The residual vibration evaluation method: performed according to an UN38.3 standard vibration test, wherein if power of the rechargeable lithium battery cells was not reduced after the evaluation, it was judged as a disconnection of one terminal.
(2) The residual impact evaluation method: after inserting the rechargeable lithium battery cells into an octagonal cylinder and rotating them, if power of the cells was not reduced after a set or predetermined period of time, it was judged that a terminal was cut by a flow.

The results according to the two methods were judged according to the following criteria:

○: Power was measured after the residual vibration and residual impact evaluations
X: No power was measured after the residual vibration and residual impact evaluations

(Table 1)

| | | Example | | | | | |
|---|---|---|---|---|---|---|---|
| | | 1 | 2 | 3 | 4 | 5 | 6 |
| | Type (or kind) | Hard coating layer | | | | | |
| Hard coating layer or PET substrate | Thickness before impregnation with an electrolyte solution (B1, $\mu$m) | 4 | 3 | 5 | 4 | 4 | 4 |
| | Thickness after impregnation with an electrolyte solution (B2, $\mu$m) | 6 | 5 | 7 | 6 | 6 | 6 |
| | Thickness change rate (B, %) | 50 | 66.67 | 40 | 50 | 50 | 50 |
| | Gel fraction (%) | 95 | 96 | 94 | 95 | 95 | 95 |

(continued)

|  |  | Example | | | | | |
|---|---|---|---|---|---|---|---|
|  |  | 1 | 2 | 3 | 4 | 5 | 6 |
| Adhesive layer | Type (or kind) | Adhesive layer | | | | | |
|  | Thickness before impregnation with an electrolyte solution (A1, $\mu$m) | 12 | 12 | 12 | 10 | 20 | 25 |
|  | Thickness after impregnation with an electrolyte solution (A2, $\mu$m) | 26 | 26 | 26 | 23 | 42 | 53 |
|  | Thickness change rate (A, %) | 116.7 | 116.7 | 116.7 | 130 | 110 | 112 |
|  | Gel fraction (%) | 88 | 88 | 88 | 89 | 87 | 87 |
|  | Peel strength (gf/cm) | 120 | 115 | 125 | 110 | 130 | 135 |
| A:B | | 2.3: | 1.75:1 | 2.9:1 | 2.6:1 | 2.2:1 | 2.24:1 |
| Ability to implement three-dimensional shape | | ○ | ○ | ○ | ○ | ○ | ○ |
| Gap filling ability | | ○ | ○ | ○ | ○ | ○ | ○ |

(Table 2)

|  |  | Comparative Example | Comparative Example |
|---|---|---|---|
|  |  | 1 | 2 |
|  | Type (or kind) | PET substrate | PP substrate |
| Hard coating layer or substrate layer | Thickness before impregnation with an electrolyte solution (B1, $\mu$m) | 4 | 10 |
|  | Thickness after impregnation with an electrolyte solution (B2, $\mu$m) | 4 | 10 |
|  | Thickness change rate (B, %) | 0 | 0 |
|  | Gel fraction (%) | 100 | 100 |
| Adhesive layer | Type (or kind) | adhesive layer | adhesive layer |
|  | Thickness before impregnation with an electrolyte solution (A1, $\mu$m) | 12 | 12 |
|  | Thickness after impregnation with an electrolyte solution (A2, $\mu$m) | 26 | 26 |
|  | Thickness change rate (A, %) | 116.67 | 116.67 |
|  | Gel fraction (%) | 88 | 88 |
|  | Peel strength (gf/cm) | 120 | 110 |
| A:B | | - | - |
| Ability to implement three-dimensional shape | | X | X |
| Gap filling ability | | X | X |

In Tables 1 and 2, if a value calculated according to Equations 1 and 2 was in decimal, it was rounded to 3 decimal places.

**Summary**

Each of the sealing tapes of Comparative Examples 1 and 2 as evaluated according to Evaluation Examples 1 to 5, even if impregnated with the electrolyte solution, exhibited no thickness change to the hard coating layer and realized no three-dimensional shape as shown in FIG. 2 and thus was short of charging (e.g., failed to charge) a gap between two objects separated from each other.

In contrast, each of the sealing tapes of Examples 1 to 5, after respectively impregnating an adhesive layer and a hard coating layer with an electrolyte solution, realized a three-dimensional shape as shown in FIG. 2 due to thickness change balance and thus charged the gap between two objects spaced apart from each other.

Accordingly, the sealing tape of one or more embodiments represented by Examples 1 to 6 had a three-dimensional shape between an outermost layer of the wound-type or kind electrode assembly and a lower layer thereof due to the impregnation with the electrolyte solution to effectively fill the gap between the cylindrical battery case and the wound-type or kind electrode assembly.

As a result, the sealing tape of one or more embodiments arranged between the outermost layer of the wound-type or kind electrode assembly and the lower layer thereof suppressed or reduced rotation and/or flow of the wound-type or kind electrode assembly in the cylindrical battery case and thereby, prevented or reduced performance degradation of the rechargeable lithium battery cells.

While this disclosure has been described in connection with what is presently considered to be practical example embodiments, it is to be understood that the disclosure is not limited to the disclosed embodiments, but, on the contrary, is intended to cover one or more suitable modifications and equivalent arrangements included within the spirit and scope of the appended claims and their equivalents.

<Reference Numerals>

| | | | |
|---|---|---|---|
| 100: | rechargeable lithium battery | | |
| 10: | positive electrode | 20: | negative electrode |
| 30: | separator | 40: | electrode assembly |
| 50: | case | 60: | sealing member |
| 200: | sealing tape | | |
| 210: | hard coating layer | 220: | adhesive layer |

**Claims**

1. A sealing tape (200) comprising:

an inorganic sealing tape comprising an adhesive layer (220) and a hard coating layer (210) on the adhesive layer (220);
wherein the adhesive layer (220):

has adhesiveness, and
has a thickness change rate (A) according to Equation 1 of greater than or equal to about 100% and less than or equal to about 120%, and

the hard coating layer (210):

does not have adhesiveness, and
has a thickness change rate (B) according to Equation 2 of greater than or equal to about 30% and less than or equal to about 70%:

## Equation 1

$$\text{thickness change rate (A) of adhesive layer (220)} = (A2 - A1)/A1 \times 100,$$

wherein, in Equation 1,

A1 is a thickness of the adhesive layer (220) before impregnation with an electrolyte solution, and
A2 is a thickness of the adhesive layer (220) after impregnation with an electrolyte solution;

## Equation 2

thickness change rate (B) of hard coating layer (210) = (B2 - B1)/B1 × 100,

wherein, in Equation 2,

B1 is a thickness of the hard coating layer (210) before impregnation with an electrolyte solution, and B2 is a thickness of the hard coating layer (210) after impregnation with an electrolyte solution, and wherein the sealing tape (200) is for a rechargeable lithium battery (100).

2. The sealing tape (200) as claimed in claim 1, wherein
a ratio of the thickness change rate (A) of the adhesive layer (220) and the thickness change rate (B) of the hard coating layer (210) is about 1.5:1 to about 3:1.

3. The sealing tape (200) as claimed in claim 1 or 2, wherein
the adhesive layer (220) has a gel fraction of greater than or equal to about 70 wt%.

4. The sealing tape (200) as claimed in any of the claims 1 to 3, wherein
the adhesive layer (220) has a T-Peel peel strength of greater than or equal to about 110 gf/cm, measured at a peel speed of 300 mm/min and a peel angle of 180 degrees, with respect to a substrate to which the adhesive layer (220) is attached.

5. The sealing tape (200) as claimed in any of the claims 1 to 3, wherein

the adhesive layer (220) comprises a first acrylic resin; and
the first acrylic resin is a copolymer of 2-ethylhexyl acrylate and 4-hydroxybutylacrylate crosslinked with an isocyanate-based crosslinking agent.

6. The sealing tape (200) as claimed in any of the claims 1 to 3, wherein

the hard coating layer (210) comprises a second acrylic resin; and
the second acrylic resin is a copolymer of dipentaerythritol hexaacrylate, pentaerythritol tetraacrylate, and ethoxylated premethylolpropane triacrylate.

7. A rechargeable lithium battery (100), comprising

a cylindrical battery case (50);
a wound-type electrode assembly (40) in the cylindrical battery case (50);
the sealing tape (200) as claimed in claim 1 between an outermost layer of the wound-type electrode assembly (40) and a lower layer thereof; and
an electrolyte solution impregnated in the wound-type electrode assembly (40) and the sealing tape.

8. The rechargeable lithium battery (100) as claimed in claim 7, wherein the wound-type electrode assembly (40) is:
a stack in which a positive electrode (10), a separator (30), and a negative electrode (20) are sequentially stacked and wound so that the negative electrode (20) is the outermost layer.

9. The rechargeable lithium battery (100) as claimed in claim 7 or 8, wherein
a length of the sealing tape (200) is about 0.8 to about 1.5 times a circumference of the wound-type electrode assembly (40).

10. The rechargeable lithium battery (100) as claimed in any of the claims 7 to 9, wherein
a portion of the sealing tape (200) is exposed to an outside of the outermost layer of the wound-type electrode assembly (40).

11. The rechargeable lithium battery (100) as claimed in any of the claims 7 to 10, wherein the portion is interposed between the wound-type electrode assembly (40) and an innermost portion of the cylindrical battery case (50).

**12.** The rechargeable lithium battery (100) as claimed in any of the claims 7 to 11, wherein the portion is in direct contact with the innermost portion.

**13.** The rechargeable lithium battery (100) as claim in any of the claims 7 to 12, wherein the lower layer is below the outermost layer of the wound-type electrode assembly (40).

**14.** The rechargeable lithium battery (100) as claim in any of the claims 7 to 13, wherein the outermost layer is the negative electrode (20) and the lower layer is the separator (30).

FIG. 1

200

210

220

FIG. 2

210

220

FIG. 3

Europäisches
Patentamt

European
Patent Office

Office européen
des brevets

# EUROPEAN SEARCH REPORT

**Application Number**

EP 24 17 8919

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 254 800 B1 (SAMSUNG SDI CO LTD [KR]) 15 April 2013 (2013-04-15) * paragraphs [0011] - [0048]; figures 1-3 * | 1-14 | INV. H01M10/04 H01M10/052 H01M50/107 H01M50/184 |
| A | JP 2019 089908 A (LINTEC CORP) 13 June 2019 (2019-06-13) * paragraph [0001] * * paragraph [0003] * * paragraph [0007] * * paragraph [0015] * * paragraph [0026] * * paragraph [0033] - paragraph [0035] * * paragraph [0053] - paragraph [0054] * * paragraph [0060] * * paragraph [0083] * * paragraph [0095] - paragraph [0096] * * paragraph [0098] * * paragraph [0118] * * figures 1-4 * | 1-14 | H01M50/186 H01M50/197 |
| A | CN 114 262 574 A (NINGDE NEW ENERGY SCIENCE AND TECH LIMITED COMPANY) 1 April 2022 (2022-04-01) * the whole document * | 1-14 | **TECHNICAL FIELDS SEARCHED (IPC)** H01M C08J C09J |
| A | EP 2 924 765 A1 (LG CHEMICAL LTD [KR]) 30 September 2015 (2015-09-30) * paragraph [0001] * * paragraph [0047] - paragraph [0048] * * paragraph [0050] * * paragraph [0060] - paragraph [0061] * * paragraph [0069] * * figures 1-4 * | 1-14 | |

The present search report has been drawn up for all claims

| Place of search | Date of completion of the search | Examiner |
|---|---|---|
| Munich | 7 November 2024 | Bossa, Christina |

## ANNEX TO THE EUROPEAN SEARCH REPORT
## ON EUROPEAN PATENT APPLICATION NO.

EP 24 17 8919

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | Publication date | Patent family member(s) | Publication date |
|---|---|---|---|
| KR 101254800 B1 | 15-04-2013 | NONE | |
| JP 2019089908 A | 13-06-2019 | NONE | |
| CN 114262574 A | 01-04-2022 | CN 114262574 A | 01-04-2022 |
| | | US 2023193084 A1 | 22-06-2023 |
| EP 2924765 A1 | 30-09-2015 | CN 104798223 A | 22-07-2015 |
| | | EP 2924765 A1 | 30-09-2015 |
| | | JP 6162250 B2 | 12-07-2017 |
| | | JP 2016500729 A | 14-01-2016 |
| | | KR 20140063478 A | 27-05-2014 |
| | | TW 201444150 A | 16-11-2014 |
| | | US 2015270524 A1 | 24-09-2015 |
| | | WO 2014077647 A1 | 22-05-2014 |

EPO FORM P0459

For more details about this annex : see Official Journal of the European Patent Office, No. 12/82